# EUROPÄISCHE PATENTSCHRIFT

(11) **EP 3 279 071 B1**
(45) Veröffentlichungstag und Bekanntmachung des Hinweises auf die Patenterteilung: **11.09.2019**
(21) Anmeldenummer: 17183829.5
(22) Anmeldetag: 28.07.2017
(51) Int. Cl.: B62K 21/26

(54) **GRIFFELEMENT**
GRIP ELEMENT
ÉLÉMENT DE POIGNÉE

(30) Priorität: 02.08.2016 DE 202016004728 U
(43) Veröffentlichungstag der Anmeldung: 07.02.2018
(73) Patentinhaber: Ergon International GmbH, 56070 Koblenz (DE)
(72) Erfinder: Arnold, Franc, 56068 Koblenz (DE)
(74) Vertreter: dompatent von Kreisler Selting Werner - Partnerschaft von Patent- und Rechtsanwälten mbB

(56) Entgegenhaltungen:
- CN-Y- 201 305 097
- FR-A- 1 221 709
- US-A- 4 522 083
- US-A1- 2008 210 042
- US-A1- 2011 126 664

## Beschreibung

Die Erfindung betrifft ein Griffelement.

CN 201 305 097 Y offenbart die Präambel von Anspruch 1.

Aus EP 1 537 014 ist ein Fahrradgriff, der insbesondere zur Befestigung an Mountainbike oder Trekkinglenkern geeignet ist, bekannt. Dieser Fahrradgriff weist einen flügelförmigen Ansatz auf, der in montiertem Zustand entgegen der Fahrtrichtung bzw. in Richtung des Benutzers weist. Beim Greifen des Fahrradgriffs liegt auf dem flügelförmigen Ansatz der Handballen auf, so dass der flügelförmige Ansatz als Abstützelement dient. Bei derartig ausgeschalteten Fahrradgriffen mit Abstützelement für den Handballen, erfolgt eine deutliche Entlastung der Hand während des Fahrens.

Insbesondere um die Greifpositionen zu verändern ist es ferner bekannt insbesondere mit Mountainbikelenkern, Trekkinglenkern oder dergleichen Lenkerhörnchen bzw. Barends zu verbinden. Diese verlaufen üblicherweise leicht steigend in Fahrtrichtung und werden gegenüber der normalen Greifposition in einem Winkel von etwa 90° angeordnet.

Ebenso bestehen bei Rennrad- oder Triathlonlenkern unterschiedliche Greifpositionen. So ist es möglich einen Rennradlenker an der Querstange unmittelbar neben dem Vorbau zu greifen. Eine weitere untere Greifposition ist an den Lenkerenden gegeben. Im Bereich der Krümmung des Rennradlenkers ist eine Bremsgriffhalterung befestigt. Diese ist von einer Kunststoffummantelung, dem sogenannten Hood umgeben. In dieser Position ist ebenfalls ein Greifen des Lenkers möglich, indem der Hood umgriffen wird. Da hierbei Zeige- und Ringfinger an den Bremsgriff angelegt werden können, handelt es sich um eine sichere Griffposition. Ferner ist es insbesondere üblich auch die Schaltung in dem Bremsgriff bei Rennrädern zu integrieren, so dass durch seitliches Bewegen des Bremsgriffs ein Schaltvorgang durchgeführt wird. Auch dies kann in der Griffposition, in der der Hood als Abstützung bzw. Greifelement dient, erfolgen.

Eine sattelförmig ausgestaltete Hood ist aus US 5,159,851 bekannt. Die Hood weist in Seitenansicht eine hinter dem Gelenk des Bremsgriffes angeordnete Vertiefung auf, so dass ein sicheres Greifen der Hood bzw. der Bremsgriffhalterung erfolgt. Zur Dämpfung oder zur Aufnahme von Schweiß kann an der Oberseite eine auswechselbare Auflage vorgesehen sein. Auch diese gegenüber üblichen Hoods etwas breiter aufgebaute Hood weist jedoch den Nachteil auf, dass insbesondere bei langen Fahrten Ermüdungserscheinungen im Handgelenk auftreten. Gegebenenfalls erfolgt auch ein Einschlafen der Hände, da die Blutzirkulation gehemmt wird.

Aufgabe der Erfindung ist es, ein Fahrradgriffelement zu schaffen, mit dem der Komfort weiter verbessert ist.

Die Lösung der Aufgabe erfolgt erfindungsgemäß durch ein Fahrradgriffelement gemäß Anspruch 1.

Das erfindungsgemäße Fahrradgriffelement weist ein Befestigungselement zum Befestigen an einer Rennrad-Bremsgriffhalterung auf. Hierbei kann es sich um eine unmittelbare oder eine mittelbare Befestigung an dem Lenker handeln. Beispielweise, aber nicht beansprucht, kann das Befestigungselement auch an einem Lenkeransatz wie einem Lenkerhorn oder Barend befestigt werden. Auch kann der Lenker in Draufsicht im Wesentlichen U-förmig ausgebildet sein, wobei die beiden Enden ähnlich Lenkhörnern in Fahrtrichtung weisen. Das Befestigungselement kann sodann an diesen Enden befestigt werden. Anstelle einer RennradBremsgriffhalterung kann es sich auch um eine Bremsgriffhalterung für ein Triathlonrad oder dergleichen handeln. Erfindungsgemäss handelt es sich um eine Bremsgriffhalterung, die entsprechend einer RennradBremsgriffhalterung ausgebildet ist. Derartige Bremsgriffhalterungen sind insbesondere von dem Hood oder einer anderen hüllenartigen Schutzeinrichtung umgeben. Die Ausgestaltung des Befestigungselements kann auf unterschiedliche Weiser erfolgen. Beispielsweise kann es sich um eine Art Schelle oder dergleichen handeln, die ein beispielsweise rohrförmiges Element des Lenkers oder eine Bremsgriffhalterung umgibt. Auch kann es sich bei dem Befestigungselement um eine Art Ansatz oder dergleichen handeln, der beispielsweise mittels eines Rastelements einer Schraubverbindung oder dergleichen mit dem Lenker oder insbesondere mit der Bremsgriffhalterung verbunden bzw. an dieser fixiert ist.

Erfindungsgemäß ist mit dem Befestigungselement ein Handballen-Auflageelement verbunden. Das erfindungsgemäße Handballen-Auflageelement ist derart ausgebildet, dass auf diesem ein Handballen in der entsprechenden Greifposition aufliegt bzw. ein Abstützen des Handballens erfolgt. Insbesondere wird hierbei der Teil des Handballens, der im Bereich des Daumens ist, abgestützt. Erfindungsgemäß ist das Fahrradgriffelement in montiertem Zustand vorzugsweise derart angeordnet, dass hierdurch das Abstützen des Handballens in einer gegenüber der herkömmlichen Greifposition um 90° gedrehten Greifposition erfolgt. Es handelt sich somit insbesondere um die Greifposition in der ein Greifen eines Hoods einer Rennradbremsgriffhalterung erfolgt. In dieser Greifposition, die insbesondere beim Rennradfahren die häufigste Greifposition darstellt, erfolgt bei bekannten Fahrradgriffen kein Abstützen des Handballens. Mit Hilfe des erfindungsgemäßen Fahrradgriffelements kann somit auch in dieser Greifposition eine erhebliche Entlastung erfolgen.

Erfindungsgemäss ist eine Oberseite des Handballen-Auflageelements in montiertem Zustand im Wesentlichen horizontal oder in Fahrtrichtung leicht steigend angeordnet. Hierbei erfolgt ein Steigen der Oberseite vorzugsweise um weniger als 5° insbesondere weniger als 10°. Bei der horizontalen und insbesondere in der leicht steigenden Ausrichtung der Oberseite des Handballen-Auflageelements kann eine gute Handentlastung realisiert werden.

Des Weiteren ist es bevorzugt, dass die Oberseite des Handballen-Auflageelements in montiertem Zustand gegenüber einer horizontalen Ebene ausgehend vom Lenker bei einem Rennradlenker nach innen fallend ausgebildet ist. Insbesondere weist die Oberseite gegenüber einer horizontalen Ebene einen Winkel zwischen 0° und 20°, vorzugsweise einen Winkel zwischen 5° und 10° auf, so dass die Oberseite in bevorzugter Ausführungsform leicht nach innen fällt. Die Oberseite des Handballen-Auflageelements kann somit einerseits in Fahrtrichtung horizontal oder leicht steigend und/oder senkrecht zur Fahrtrichtung nach innen horizontal oder leicht fallend ausgebildet sein.

Sofern die Oberseite des Handballen-Auflageelements in sich nicht eben sondern gekrümmt, insbesondere konkav gekrümmt, ist, ergeben sich die vorstehend angegebenen Winkel gegenüber einer Tangente zur Oberfläche, wobei die Tangente an einem Punkt mit mittlerem Abstand zwischen der Außenseite der Hood und dem Rand des Handballen-Auflageelements angeordnet ist. Vorzugsweise wird als Punkt, an dem die Tangente angelegt wird, der Mittelpunkt bzw. Schwerpunkt der Oberfläche bestimmt, d. h. es handelt sich somit um den mittleren Punkt in Längsrichtung bzw. Fahrtrichtung des Handballen-Auflageelements sowie um einen Punkt, der einen mittleren Abstand des Handballen-Auflageelements senkrecht zur Fahrtrichtung definiert.

Erfindungsgemäss ist zur Verbesserung der Ergonomie die Oberseite insbesondere in Verbindung mit einer im Wesentlichen horizontalen oder leicht steigenden Ausrichtung eine sich im Wesentlichen in Längsrichtung des Handballen-Auflageelements erstreckende Mulde aufweist. Die Längsrichtung des Handballen-Auflageelements entspricht hierbei in montiertem Zustand im Wesentlichen der Fahrtrichtung. Insbesondere erstreckt sich die Längsrichtung der Mulde in montiertem Zustand nicht exakt in Längs- bzw. Fahrtrichtung, sondern ist leicht nach innen geneigt. Die Ausrichtungen der beiden Mulden laufen in Fahrtrichtung gesehen in montiertem Zustand somit aufeinander zu. Die Mulde ist somit insbesondere konvex ausgebildet, wobei der Krümmungsradius vorzugsweise größer als 50 mm und besonders bevorzugt größer als 80 mm ist.

Erfindungsgemäss weist das Handballen-Auflageelement eine Randerhöhung auf, die dem Befestigungselement gegenüberliegend angeordnet ist. Hierdurch kann die Ergonomie weiter verbessert werden.

Erfindungsgemäss erfolgt ein Montieren des Fahrradgriffelements derart, dass das Handballen-Auflageelement in Fahrtrichtung bezogen auf ein Hood auf der jeweiligen Innenseite angeordnet ist. Dementsprechend ist in bevorzugter Ausführungsform auch die Randerhöhung in montiertem Zustand auf der Innenseite angeordnet. Bevorzugt ist es hierbei, dass sich die Randerhöhung auf der Innenseite im Wesentlichen über die gesamte Länge des Handballen-Auflageelements erstreckt. Hierbei kann die Randerhöhung bei einem in Draufsicht im Wesentlichen dreieckförmigen Handballen-Auflageelement entlang einer Innenkante bzw. Hinterkante, jedoch nicht entlang einer Vorderkante, die im Wesentlichen in Fahrtrichtung weist, verlaufen.

Eine weitere Verbesserung der Ergonomie kann dadurch erzielt werden, dass die Breite des Handballen-Auflageelements in montiertem Zustand in Längsrichtung bzw. in Fahrtrichtung zunimmt. Hierdurch erfolgt insbesondere eine gute Abstützung im Bereich des Daumengrundgelenks. Die Breite des Handballen-Auflageelements verbreitert sich in Längsrichtung vorzugsweise von ca. 5 mm auf ca. 15 mm. Die Breite des Handballen-Auflageelements ist an der breitesten Stelle somit vorzugsweise größer als 10 mm, insbesondere größer als 15 mm und besonders bevorzugt größer als 20 mm.

Des Weiteren ist es besonders bevorzugt, dass das Handballen-Auflageelement in Draufsicht, d. h. in einer Ansicht von oben in montiertem Zustand, eine im Wesentlichen dreieckige Form aufweist. Vorzugsweise sind die Kanten und Ecken dieser im Wesentlichen dreieckigen Form gerundet ausgebildet. Vorzugsweise weist das Handballen-Auflageelement somit eine in Fahrtrichtung weisende Vorderkante und eine im Wesentlichen entgegen der Fahrtrichtung bzw. in montiertem Zustand nach innen weisende Hinterkante auf. Bevorzugt ist es hierbei, dass die Vorderkante kürzer ist als die Hinterkante. Des Weiteren ist es bevorzugt, dass die Vorderkante des Handballen-Auflageelements zur Fahrtrichtung einen Winkel α von 30° bis 60° und besonders bevorzugt 40° bis 50° einschließt. Die Vorderkante ist hierbei ausgehend von einer INnseite der Hood entgegen der Fahrtrichtung geneigt bzw. verläuft nach hinten. Vorzugsweise schließt die Hinterkante zur Fahrtrichtung einen Winkel β von 10° bis 20° ein. Die Hinterkante verläuft ausgehend von der Hood nach vorne bzw. in Fahrtrichtung. Sofern die Vorderkante und/oder die Hinterkante gekrümmt, insbesondere konvex gekrümmt, ausgebildet sind, erfolgt das Bestimmen der Winkel mit Hilfe einer an einen auf die Länge der jeweiligen Kante bezogenen Mittelpunkt angelegten Tangente.

In weiterer bevorzugter Ausführungsform weist das Handballen-Auflageelement elastomeres Material auf bzw. ist aus elastomerem Material hergestellt. Aufgrund der Elastizität kann eine Federung bzw. Dämpfung realisiert werden. Dies erhöht wiederum den Greifkomfort.

Zusätzlich ist es möglich, das Handballen-Auflageelement zumindest teilweise mit einem Dämpfungselement zu bedecken bzw. mit einem Dämpfungselement teilweise oder vollständig zu ummanteln. Das Handballen-Auflageelement ist somit in bevorzugter Ausführungsform aus unterschiedlichen Materialien hergestellt, wobei ein innerer skelettartiger Kern aus härterem jedoch ebenfalls federelastischem Material hergestellt ist und dieser zusätzlich von einem weicheren dämpfenden beispielsweise polsterartigen Material umgeben ist.

Erfindungsgemäss ist das Befestigungselement mit einer Rennrad-Hood verbunden ist. Insbesondere ist das Befestigungselement einstückig mit der Rennrad-Hood ausgebildet. In besonders bevorzugter Ausführungsform betrifft die Erfindung somit eine Rennrad-Hood in Verbindung mit einem Handball-Auflageelement, wobei die Rennrad-Hood und das Handballen-Auflageelement insbesondere einstückig ausgebildet sind. In montiertem Zustand umgibt die Rennrad-Hood die Bremsgriffhalterung zumindest teilweise insbesondere vollständig. Selbstverständlich kann in die Bremsgriffhalterung ein Schaltelement integriert sein, wobei es sich insbesondere auch um ein elektronisches Schaltelement handeln kann.

In montiertem Zustand ist das Handballen-Auflageelement an einer Innenseite der Rennrad-Hood angeordnet. Die Oberseite des Handballen-Auflageelements liegt hierbei in montiertem Zustand etwas tiefer als die Oberseite der Rennrad-Hood. Insbesondere ist es hierdurch möglich, die gewohnte Greifposition an der Rennrad-Hood beizubehalten, wobei gleichzeitig ein Abstützen des Handballens mit Hilfe des erfindungsgemäßen Handballen-Auflageelements erfolgt.

Des Weiteren betrifft die Erfindung einen Fahrradlenker, wie einen Rennradlenker Bei einem Rennradlenker ist mit der Hood des Bremsgriffs ein erfindungsgemäßes Handballen-Auflageelement verbunden oder die Hood weist ein entsprechendes Handballen-Auflageelement, wie vorstehend beschrieben, auf. Bei einem Lenker mit Lenkerhörnchen, was jedoch nicht beansprucht ist, ist das Lenkerhörnchen mit einem Handballen-Auflageelement, wie vorstehend beschrieben, verbunden oder einstückig mit einem derartigen Handballen-Auflageelement ausgebildet. Das Handballen-Auflageelement ist hierbei insbesondere wie vorstehend beschrieben, vorteilhaft weitergebildet.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht eines Rennradlenkers mit montiertem Brems-/Schaltgriff,
- Fig. 2: eine schematische perspektivische Ansicht in Richtung eines Pfeils II in Fig. 1,
- Fig. 3: eine schematische Schnittansicht entland der Linie III-III in Figur 1 und
- Fig. 4: eine schematisch vergrößerte Draufsicht einer mit einem Rennrad-Bremsgriff verbundenen Hood.

Das erfindungsgemäße Fahrradgriffelement wird nachfolgend anhand der Figuren in Bezug auf eine bevorzugte Ausführungsform in Verbindung mit einer Rennrad-Hood beschrieben. Ein entsprechendes Handballen-Auflageelement kann jedoch insbesondere in montiertem Zustand auch an einer Innenseite eines Lenkerhörnchens bzw. Barends vorgesehen sein, was jedoch nicht beansprucht ist.

Ein Rennradlenker 10 ist mit einem Vorbau 12 verbunden oder einstückig mit diesem ausgebildet. Der Rennradlenker 10 weist ein quer verlaufendes Lenkerelement 14 auf, an das sich jeweils ein bogenförmiges im Wesentlichen einen Halbkreis ausbildendes Element 16 anschließt. Dieses endet in einem in montiertem Zustand im Wesentlichen horizontal verlaufenden rohrförmigen Lenkerende 18.

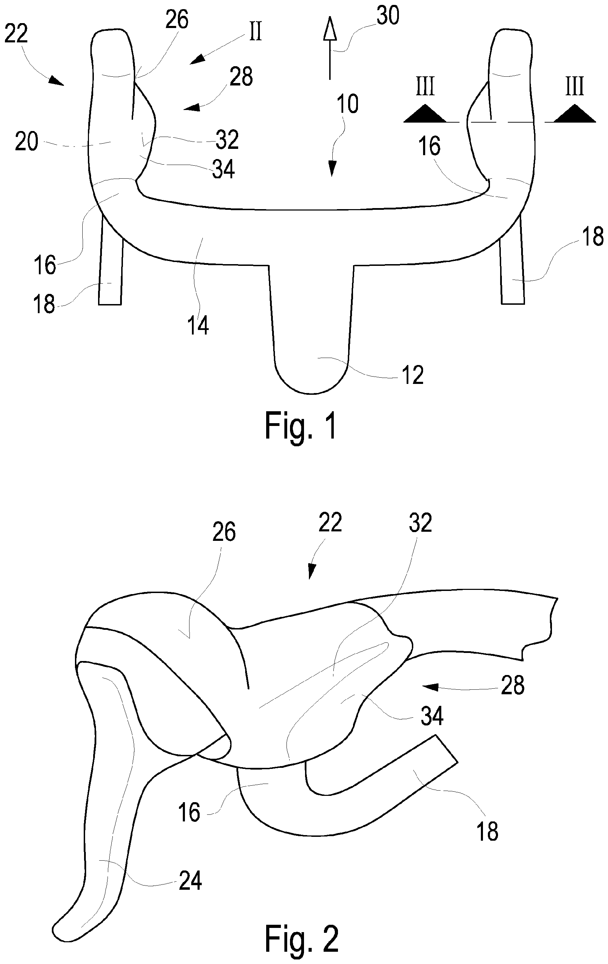

Mit dem gebogenen Element 16 ist eine Bremsgriffhalterung 20 (Fig. 2) verbunden. Diese ist im dargestellten Ausführungsbeispiel von einer Schutzhülle in Form einer Rennrad-Hood 22 umgeben. Mit der Bremsgriffhalterung, die selbstverständlich auch in eine Schaltung integriert sein kann, ist ein Bremshebel 24, der gegebenenfalls auch als Schalthebel fungiert, verbunden.

Die Rennrad-Hood 22 umgibt die Bremsgriffhalterung in üblicher Weise. Auf einer Innenseite 26 der Rennrad-Hood ist das Handballen-Auflageelement 28 angeordnet. Das Handballen-Auflageelement 28 ist in dem dargestellten montierten Zustand im Wesentlichen horizontal bzw. in Fahrtrichtung 30 leicht steigend angeordnet. Zur Verbesserung der Ergonomie ist eine sich im Wesentlichen in Längsrichtung des Handballen-Auflageelements 28 erstreckende Mulde 32 vorgesehen. In montiertem Zustand verlaufen die Fahrtrichtungen 30 der beiden Mulden 32 leicht nach innen (Fig. 1).

Zusätzlich weist das Handballen-Auflageelement an seiner Innenseite eine Randerhöhung 34 auf.

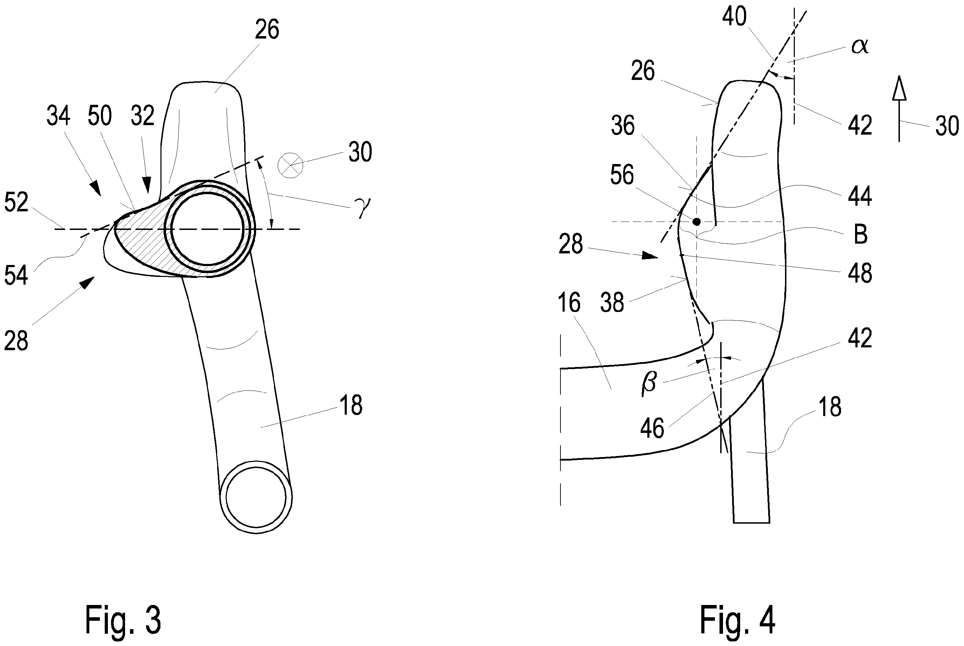

In der dargestellten besonders bevorzugten Ausführungsform des Handballen-Auflageelements 28 ist dieses in Draufsicht (Fig. 4) im Wesentlichen dreieckförmig ausgebildet und weist somit eine Vorderkante 36, die im Wesentlichen in Fahrtrichtung 30 weist, und eine Hinterkante 38, die in montiertem Zustand im Wesentlichen nach innen weist, auf. Die Vorderkante 36 verläuft ausgehend von der Innenseite 26 der Hood entgegen und die Hinterkante 38 in Fahrtrichtung 30. Die Kanten sind, wie aus Figur 4 ersichtlich, in Draufsicht leicht konvex ausgebildet, wobei insbesondere die Hinterkante 38 eine leicht konvexe Krümmung aufweist. Die Vorderkante 36 bzw. eine an die Vorderkante 36 angelegte Tangente 40 weist zu einer in Fahrtrichtung verlaufenden Linie 42 einen Winkel α auf. Dieser liegt vorzugsweise im Bereich von 30° bis 60°, insbesondere 40° bis 50°. Bei einer gekrümmten Vorderkante 36 wird die Tangente an einem mittleren Punkt 44, bezogen auf die Länge der Kante 36, angelegt.

Eine hintere Kante 38 bzw. eine Tangente 46 der hinteren Kante 38 weist zu einer in Fahrtrichtung 30 verlaufenden Linie 42 einen Winkel β auf. Dieser liegt vorzugsweise im Bereich von 10° bis 20°. Die Tangente 46 wird wieder an einen auf die Länge der hinteren Kante 38 bezogenen mittleren Punkt 48 angelegt.

Insbesondere aus der vorstehend beschriebenen Ausgestaltung des Handballe-Auflageelements 28 ergibt sich eine in Draufsicht (Fig. 4) im Wesentlichen dreieckförmige Ausgestaltung des Handballen-Auflageelements 28, wobei die Vorderkante 36 kürzer ist als die Hinterkante 38.

An einer breitesten Stelle weist in Draufsicht (Fig. 4) das Handballen-Auflageelement 28 eine Breite B auf, die vorzugsweise mindestens 10 mm und besonders bevorzugt mindestens 15 mm oder ggf. sogar mindestens 20 mm beträgt.

Des Weiteren ist es bevorzugt, dass eine Oberseite 50 (Fig. 3) gegenüber einer horizontalen Ebene 52 nach innen geneigt ist. Die Oberseite 50 bzw. eine an diese angelegte Tangente 54 weist hierbei vorzugsweise einen Winkel γ auf, der insbesondere im Bereich von 0° bis 20° und besonders bevorzugt im Bereich von 5° bis 10° liegt. Sofern die Oberseite 50 nicht eben ist, sondern insbesondere eine konkave Mulde 32 aufweist, wird die Tangente 54 an einen mittleren Punkt 56 (Fig. 4) angelegt. Der mittlere Punkt 56 entspricht im Wesentlichen dem Schwerpunkt des Handballen-Auflageelements 28 bzw. einem Mittelpunkt. Der Mittelpunkt ist definiert im Bereich der größten Breite B des Handballen-Auflageelements als Mitte bzw. halber Abstand dieser Breite, insbesondere zur Innenseite 26 der Hood.

Zusätzlich ist es möglich, dass die Oberseite 50 in Fahrtrichtung 30 leicht steigend ausgebildet ist.

Die Randerhöhung 34 verläuft in bevorzugter Ausführungsform nur im Bereich der Hinterkante 38 und nicht im Bereich der Vorderkante 36.

## Patentansprüche

1. Fahrradgriffelement mit
einem Befestigungselement (22) zur Befestigung an einer Rennrad-Bremsgriffhalterung (20) und einem mit dem Befestigungselement (22) verbundenen Handballen-Auflageelement (28) zur Abstützung eines Handballens in montiertem Zustand, wobei das Handballen-Auflageelement in Fahrtrichtung bezogen auf eine Rennrad-Hood auf der jeweiligen Innenseite angeordnet ist und
wobei eine Oberseite des Handballen-Auflageelements (28) in montiertem Zustand im Wesentlichen Horizontal oder in Fahrtrichtung (30) leicht steigend ausgebildet ist, eine im Wesentlichen in Längsrichtung (30) verlaufende Mulde (32) und eine dem Befestigungselement (22) gegenüberliegende Randerhöhung (34) aufweist, **dadurch gekennzeichnet, dass** das Befestigungselement (22) mit der Rennrad-Hood verbunden, insbesondere einstückig ausgebildet ist.

2. Fahrradgriffelement nach Anspruch 1, **dadurch gekennzeichnet, dass** eine Breite des Handballen-Auflageelements in Längs- bzw. Fahrtrichtung (30) zunimmt.

3. Fahrradgriffelement nach Anspruch 1 oder 2, **dadurch gekennzeichnet, dass** das Handballen-Auflageelement elastisches Material aufweist und oder zumindest teilweise von einem Dämpfungselement bedeckt bzw. ummantelt ist.

4. Fahrradgriffelement nach einem der Ansprüche 1 bis 3, **dadurch gekennzeichnet, dass** die Rennrad-Hood (22) in montiertem Zustand vorzugsweise eine Bremsgriff-Halterung (20) zumindest teilweise umgibt.

5. Fahrradgriffelement nach Anspruch 4, **dadurch gekennzeichnet, dass** das Handballen-Auflageelement (28) an eine Innenseite (26) der Rennrad-Hood angeordnet ist.

6. Fahrradgriffelement nach einem der Ansprüche 1 bis 5, **dadurch gekennzeichnet, dass** eine Oberseite (50) des Handballen-Auflageelements (28) gegenüber einer horizontalen Ebene (52) in montiertem Zustand des Fahrradgriffelements ausgehend von der Rennrad-Hood eines Rennradlenkers nach innen fallend ausgebildet ist, wobei ein Winkel γ zwischen der horizontalen Ebene (52) und der Oberseite (50) bzw. einer Tangente (54) der Oberseite im Bereich von 0° bis 20°, insbesondere 5° bis 10°, liegt.

7. Fahrradgriffelement nach einem der Ansprüche 1 bis 6, **dadurch gekennzeichnet, dass** das Handballen-Auflageelement (28) eine Breite von mehr als 10 mm, insbesondere mehr als 15 mm und besonders bevorzugt mehr als 20 mm aufweist.

8. Fahrradgriffelement nach einem der Ansprüche 1 bis 7, **dadurch gekennzeichnet, dass** das Handballen-Auflageelement (28) in Draufsicht eine im Wesentlichen dreieckförmige Form aufweist.

9. Fahrradgriffelement nach Anspruch 8, **dadurch gekennzeichnet, dass** eine in Fahrtrichtung (30) weisende Vorderkante (36) des Handballen-Auflageelements (28) zur Fahrtrichtung (30) einen Winkel α im Bereich von 30° bis 60°, insbesondere 40° bis 50° aufweist.

10. Fahrradgriffelement nach Anspruch 8 oder 9, **dadurch gekennzeichnet, dass** eine entgegen der Fahrtrichtung (30) weisende Hinterkante (38) des Handballenauflageelements (28) zur Fahrtrichtung einen Winkel β aufweist, der im Bereich von 10° bis 20° liegt.

11. Fahrradgriffelement nach Anspruch 10, **dadurch gekennzeichnet, dass** die Vorderkante (36) kürzer als die Hinterkante (38) ist.

12. Fahrradlenker mit einem Fahrradgriffelement nach einem der Ansprüche 1 bis 11.

## Claims

1. A bicycle grip element comprising:
a mounting element (22) for being mounted on a racing bicycle break lever holder (20), and
a wrist rest element (28) connected to the mounting element (22) for supporting a wrist in a mounted state, wherein the wrist rest element is arranged relative to the driving direction on a racing bicycle hood on the respective inner side, and
wherein an upper side of the wrist rest element (28) is adapted, in a mounted state, substantially horizontal or, in driving direction (30), slightly inclining, and comprises a depression (32) substantially disposed in longitudinal direction (30) and an edge increase (34) facing the mounting element (22), **characterized in that** the mounting element (22) is connected to and particularly integrally formed with the racing bicycle hood.

2. The bicycle grip element according to claim 1, **characterized in that** a width of the wrist rest element increases in longitudinal direction and in driving direction (30), respectively.

3. The bicycle grip element according to claim 1 or 2, **characterized in that** the wrist rest element comprises an elastic material and/or is at least partially covered or coated by a damping element.

4. The bicycle grip element according to any one of claims 1 to 3, **characterized in that**, in a mounted state, the racing bicycle hood (22) preferably at least partially surrounds a brake lever holder (20).

5. The bicycle grip element according to claim 4, **characterized in that** the wrist rest element (28) is arranged at an inner side (26) of the racing bicycle hood.

6. The bicycle grip element according to any one of claims 1 to 5, **characterized in that** an upper side (50) of the wrist rest element (28) facing a horizontal plane (52) in a mounted state of the bicycle grip element is adapted to fall inwards from the racing bicycle hood of a racing bicycle handlebar, wherein an angle y is adapted between the horizontal plane (52) and the upper side (50) and/or a tangent (54) of the upper side in a range from 0° to 20°, particularly from 5° to 10°.

7. The bicycle grip element according to any one of claims 1 to 6, **characterized in that** the wrist rest element (28) comprises a width of more than 10 mm, particularly more than 15 mm, and particularly preferably more than 20 mm.

8. The bicycle grip element according to any one of claims 1 to 7, **characterized in that**, regarded in plan view, the wrist rest element (28) has a substantially triangular form.

9. The bicycle grip element according to claim 8, **characterized in that** a front edge (36) of the wrist rest element (28) facing in driving direction (30) comprises an angle α relative to the driving direction (30) in a rage from 30° to 60°, particularly from 40° to 50°.

10. The bicycle grip element according to claim 8 or 9, **characterized in that** a rear edge (38) of the wrist rest element (28) opposite to the driving direction (30) comprises an angle β relative to the driving direction in a range from 10° to 20°.

11. The bicycle grip element according to claim 10, **characterized in that** the front edge (36) is shorter than the rear edge (38).

12. A bicycle handlebar comprising a bicycle grip element according to any of claims 1 to 11.

## Revendications

1. Élément de poignée de bicyclette, comprenant
un élément de fixation (22) destiné à être fixé à un support de poignée de frein de vélo de route (20), et
un élément formant repose-mains (28) relié à l'élément de fixation (22) et destiné, à l'état assemblé, à supporter les éminences, dans lequel l'élément formant repose-mains est agencé sur un couvre-cocotte du côté intérieur respectif par rapport au sens de déplacement et
dans lequel un côté supérieur de l'élément formant repose-mains (28) à l'état assemblé est réalisé de manière essentiellement horizontale ou légèrement ascendante dans le sens de déplacement (30), et présente une cuvette (32) s'étendant essentiellement dans le sens longitudinal (30) et une élévation de bord (34) opposée à l'élément de fixation (22), **caractérisé en ce que** l'élément de fixation (22) est relié au couvre-cocotte, en particulier est réalisé d'un seul tenant avec celui-ci.

2. Élément de poignée de bicyclette selon la revendication 1, **caractérisé en ce que** la largeur de l'élément formant repose-mains augmente dans le sens longitudinal ou de déplacement (30).

3. Élément de poignée de bicyclette selon la revendication 1 ou 2, **caractérisé en ce que** l'élément formant repose-mains présente un matériau élastique et/ou est au moins partiellement recouvert ou enveloppé d'un élément amortisseur.

4. Élément de poignée de bicyclette selon l'une des revendications 1 à 3, **caractérisé en ce que** le couvre-cocotte (22) à l'état assemblé entoure au moins partiellement de préférence un support de poignée de frein (20).

5. Élément de poignée de bicyclette selon la revendication 4, **caractérisé en ce que** l'élément formant repose-mains (28) est agencé au niveau d'un côté intérieur (26) du couvre-cocotte.

6. Élément de poignée de bicyclette selon l'une des revendications 1 à 5, **caractérisé en ce qu'**un côté supérieur (50) de l'élément formant repose-mains (28) à l'état assemblé de l'élément de poignée de bicyclette est réalisé, par rapport à un plan horizontal (52), en descendant vers l'intérieur depuis le couvre-cocotte d'un cintre de vélo de route, un angle γ entre le plan horizontal (52) et le côté supérieur (50) ou une tangente (54) du côté supérieur se situant dans la plage comprise entre 0° et 20°, en particulier comprise entre 5° et 10°.

7. Élément de poignée de bicyclette selon l'une des revendications 1 à 6, **caractérisé en ce que** l'élément formant repose-mains (28) présente une largeur supérieure à 10 mm, en particulier supérieure à 15 mm, et de manière particulièrement préférée supérieure à 20 mm.

8. Élément de poignée de bicyclette selon l'une des revendications 1 à 7, **caractérisé en ce que** l'élément formant repose-mains (28) présente une forme essentiellement triangulaire en vue en plan.

9. Élément de poignée de bicyclette selon la revendication 8, **caractérisé en ce qu'**un bord antérieur (36), orienté dans le sens de déplacement (30), de l'élément formant repose-mains (28) présente par rapport au sens de déplacement (30) un angle α situé dans la plage comprise entre 30° et 60°, en particulier comprise entre 40° et 50°.

10. Élément de poignée de bicyclette selon la revendication 8 ou 9, **caractérisé en ce qu'**un bord postérieur (38), orienté à l'encontre du sens de déplacement, de l'élément formant repose-mains (28) présente par rapport au sens de déplacement un angle β situé dans la plage comprise entre 10° et 20°.

11. Élément de poignée de bicyclette selon la revendication 10, **caractérisée en ce que** le bord antérieur (36) est plus court que le bord postérieur (38).

12. Cintre de bicyclette comprenant un élément de poignée de bicyclette selon l'une des revendications 1 à 11.
